# NEUE EUROPÄISCHE PATENTSCHRIFT

(11) **EP 2 411 761 B2**
(45) Veröffentlichungstag und Bekanntmachung des Hinweises auf die Entscheidung über den Einspruch: **29.04.2020**
(45) Hinweis auf die Patenterteilung: 19.12.2012
(21) Anmeldenummer: 10703177.5
(22) Anmeldetag: 02.02.2010
(51) Int. Cl.: G01C 15/00, H01S 5/00

(54) **SELBSTNIVELLIERENDES MEHR-LINIEN-LASERGERÄT**
SELF-LEVELING MULTI-LINE LASER DEVICE
APPAREIL LASER MULTI-RAIES À AUTONIVELLEMENT

(30) Priorität: 26.03.2009 DE 102009001878
(43) Veröffentlichungstag der Anmeldung: 01.02.2012
(73) Patentinhaber: Robert Bosch GmbH, 70442 Stuttgart (DE)
(72) Erfinder: ZIMMERMANN, Thomas, 80639 München (DE)
(86) Internationale Anmeldenummer: PCT/EP2010/051213
(87) Internationale Veröffentlichungsnummer: WO 2010/108718

(56) Entgegenhaltungen:
- EP-A2- 0 488 046
- EP-A2- 1 328 045
- EP-A2- 1 469 282
- WO-A2-2007/140323
- JP-A- 2002 195 831
- TW-U- M 297 465
- US-A- 4 836 669
- US-A- 5 539 990
- US-A- 5 572 797

## Beschreibung

### Stand der Technik

Die Erfindung bezieht sich auf ein selbstnivellierendes Mehr-Linien-Lasergerät zur Erzeugung zumindest zweier, aufeinander senkrecht stehender projizierbarer Laserlinien. Durch ein solches Gerät können beispielsweise horizontale und vertikale Ebenen durch jeweils eindimensional aufgeweitete Laserstrahlen aufgespannt werden und horizontale bzw. vertikale Linien beispielsweise auf Wandflächen oder Gegenstände projiziert werden. Diese projizierbaren Linien werden hinfort als Laserlinien oder projizierte Laserlinien des Mehr-Linien-Lasergerätes bezeichnet, obwohl das Gerät diese Linien nicht selbst, sondern nur durch Projektion des aufgeweiteten Laserstrahls beispielsweise auf eine Wand oder einen Gegenstand hervorbringen kann.

Derartige Mehr-Linien-Lasergeräte können insbesondere in Industrie, Handwerk und Heimwerkerbereich beispielsweise für Justier-, Markier-, Mess- und Ausrichtaufgaben Verwendung finden.

Es sind diverse Zwei-Linien-Lasergeräte aus dem Stand der Technik bekannt, mit denen zwei aufeinander senkrecht stehende Laserlinien projiziert werden können. Hierbei werden entweder Laserstrahlen durch Linsenelemente in einer Ebene aufgeweitet, wodurch sich jeweils eine Laserlinie mit einem nutzbaren Winkelbereich von ca. 60° bis 120° erzeugen lässt. Zwei dieser Laserlinien, können so durch Kombination zweier Laserstrahlen und zweier Linsenelementen in 90°-Stellung zueinander bereitgestellt werden.

Nachteil derartiger Zwei-Linien-Lasergeräte mit Linsenelement zur Aufweitung des Laserstrahls ist u.a. der beschränkte nutzbare Winkelbereich des aufgeweiteten Laserstrahls von typischerweise 60° bis 120°, wodurch sich nur ein Laserkreuz mit einem einzigen Schnittpunkt zwischen den zwei projizierten Laserlinien erzeugen lässt, sowie als weiterer Nachteil der starke Helligkeitsabfall der erzeugbaren Laserlinie zu den Außenbereichen zu.

Alternativ sind auch Rotationslasergeräte auf dem Markt erhältlich, bei denen ein Laserstrahl durch ein schnell rotierendes Umlenkelement um 90° umgelenkt und so durch den mit dem rotierenden Umlenkelement umlaufenden Laserstrahl die optische Illusion einer kontinuierlichen Laserlinie erzeugt wird. Durch Kombination zweier im 90°-Winkel angeordneter Rotationslasereinheiten in einem Gerät lassen sich so zwei aufeinander senkrecht stehende Laserlinien beispielsweise auf Wände oder Gegenstände projizieren.

Nachteile solcher Rotationslasergeräte liegen u.a. in der aufwendigen mechanischen Konstruktion und den damit verbundenen hohen Herstellungskosten, sowie der großen, schweren Bauform derartiger Lasergeräte. Weitere Nachteile derartiger Geräte liegen in Energieverbrauch und Verschleiß sowie in deren begrenzter Zuverlässigkeit über die Lebensdauer.

Aus der US 4 836 669 A ist ein Mehrlinien-Laser-Projektionsgerät bekannt, welches zwei senkrecht zueinander stehende Laserebenen erzeugt. Bei der Vorrichtung der US 4 836 669 A wird ein kollimierter Laserstrahl über ein spiegelndes Kegelelement geführt, um zwei senkrecht zu Einfallsrichtung verlaufende Lasersignale zu erzeugen. Mittels jeweils eines Spiegels, der in einem jedem der beiden Strahlengänge integriert ist, werden die Laserstrahlen derart umgelenkt, dass diese einen 90° Winkel zueinander bilden.

Aus der US 5,539,990 ist ein selbsmivellierendes Pendel-Lasersystem bekannt, bei dem mittels Zylinderlinsen die Signale zwei oder dreier Laserquellen in zwei bzw. drei orthogonal zueinander verlaufende Referenzebenen zerlegt werden.

Die EP 0 488 046 A2 offenbart die Verwendung von Strahlteilern und Pentaprismen, um aus dem Signal einer Laserdiode mehre, senkrecht aufeinander stehende Lasermarkierungen zu erzeugen.

Die WO 2007/140323 A2 offenbart eine Vorrichtung und eine Methode zur Projizierung optischer Nivellierungslinien. Die Vorrichtung, die in Form eines Pendellasers ausgeformt ist, besitzt ein vertikales und ein horizontales Projektionsmodul, wobei die Erzeugung der zu projizierenden Laserebenen mittels zweier zueinander senkrecht stehender Kegel erfolgt.

### Aufgabe der Erfindung

Aufgabe der vorliegenden Erfindung ist es, die Nachteile des Standes der Technik zu überwinden und insbesondere ein selbstnivellierendes Mehr-Linien-Lasergerät bereitzustellen, das bei kleiner Bauform, günstigen Herstellungskosten und ohne rotierende Teile Laserlinien über einen großen Winkelbereich von mindestens 180° projizieren kann.

### Offenbarung der Erfindung

Diese Aufgabe wird durch das selbstnivellierende Mehr-Linien-Lasergerät des Anspruchs 1 gelöst.

Bevorzugte Ausführungsformen sind in den abhängigen Ansprüchen angegeben.

Erfindungsgemäß wird ein selbstnivellierendes Mehr-Linien-Lasergerät mit zumindest zwei Laserstrahlen und zumindest zwei reflektierenden Kegeln angegeben, bei dem die Kegelachsen der reflektierenden Kegel aufeinander senkrecht stehen und jeder der Laserstrahlen - vorzugsweise exzentrisch - parallel zur Achse eines der reflektierenden Kegel gegen die Spitze dieses reflektierenden Kegels richtbar ist, wodurch zumindest zwei projizierbare Laserlinien erzeugt werden können.

Ein Vorteil der Erfindung besteht in der Möglichkeit, beispielsweise zwei aufeinander senkrecht stehende Laserlinien mit hoher Lagegenauigkeit bereitzustellen, die bei relativ gleichmäßiger Helligkeitsverteilung über diesen großen Winkelbereich unter möglichst vollständiger Ausnutzung der abgestrahlten Laserenergie eine bessere Sichtbarkeit aufweisen. Zudem ist es als weiterer Vorteil möglich, aufgrund der großen Winkelabdeckung der Laserlinie von mindestens 180° zwei Schnittpunkte (oder Markierungskreuze) der projizierbaren Laserlinien in "180°-Stellung" zueinander beispielsweise auf einander gegenüberliegenden Wänden zu erzeugen. Ein weiterer Vorteil der erfindungsgemäßen Konstruktion liegt darin, dass die Laserenergie effektiv weitgehend nur über dem gewünschten Winkelbereich - und nicht wie bei den bislang in diesem Winkelbereich zum Einsatz kommenden Rotationslasern über 360° - verteilt wird. Zudem erlaubt die erfindungsgemäße Konstruktion den besonders vorteilhaften Einsatz von Laserstrahlquellen mit unrunden Strahlquerschnitten, wie beispielsweise der besonders sparsamen, zuverlässigen und kostengünstigen Laserdioden, wobei sich hierbei eine sehr gleichmäßige Helligkeitsverteilung der erzeugbaren Laserlinien erzielen lässt. Durch die erfindungsgemäße Konstruktion ist in vielen Anwendungsfällen ein Ersatz der aufwendigen, teuren und schweren Rotationslasergeräte möglich.

In einer bevorzugten Ausführungsform der Erfindung können die reflektierenden Kegel zumindest Teilflächen eines Mantels eines geraden Kreiskegels mit einem Kegelöffnungswinkel von 90° aufweisen. Hierdurch kann gewährleistet werden, dass ein parallelgerichteter Laserstrahl, der parallel zur Kegelachse der Kegelteilfläche einfällt, exakt in einer Ebene aufgeweitet wird. Durch die Verwendung solcher Kegelteilflächen anstelle eines vollständigen Kegels ist es möglich, Material und Bauraum einzusparen.

In einer weiteren bevorzugten Ausführungsform der Erfindung kann zumindest einer der reflektierenden Kegel nicht-reflektierende Teilflächen aufweisen. So kann es beispielsweise erwünscht sein, einen Sektor des Kegels zu schwärzen, zu mattieren oder nicht zu verspiegeln, um so die erzeugbare Laserlinie im Winkelbereich beispielsweise auf 180° oder 200° oder 240° oder einen anderen Wert zu begrenzen und "Fehllicht" und unerwünschte Reflexionen zu unterbinden.

In einer weiteren bevorzugten Ausführungsform der Erfindung kann zumindest ein Laserstrahl durch eine Laserdiode als Laserstrahlquelle erzeugbar sein und vorzugsweise durch zumindest ein kollimierendes optisches Element, insbesondere eine Kollimatorlinse, kollimierbar sein. Durch den Einsatz von Laserdioden als Laserstrahlquellen ist eine besonders kostengünstige Herstellung sowie eine kompaktere Bauform des Mehr-Linien-Lasergerätes möglich. Mittels des kollimierenden optischen Elements kann dabei der divergente Laserstrahl, wie er von Laserdioden emittiert wird, kollimiert, also parallelgerichtet werden, wodurch eine exaktere Projektionsgeometrie und damit eine exaktere Laserlinie unter Verwendung eines geraden Kreiskegels erzielt werden kann.

Erfindungsgemäss kann durch die jeweilige Laserdiode ein Laserstrahl mit elliptischem Strahlquerschnitt erzeugbar sein, wobei die Mittelachse des elliptischen Strahlquerschnitts gegenüber der Kegelachse einen Parallelversatz aufweist und in Richtung der kurzen Halbachsen des elliptischen Strahlquerschnitts von der Kegelachse beabstandet ist und vorzugsweise der Abstand der Mittelachse des elliptischen Strahlquerschnitts von der Kegelachse kleiner oder gleich, insbesondere kleiner ist als die Länge der kurzen Halbachsen des elliptischen Strahlquerschnitts. Hierdurch kann eine besonders hohe Helligkeit und gleichmäßige Helligkeitsverteilung über einen Winkelbereich von mehr als 180° erzielt werden.
In einer weiteren bevorzugten Ausführungsform der Erfindung kann auch eine Blende im Strahlengang der Laserdiode angeordnet sein. Hierdurch kann die Helligkeitsverteilung der projizierbaren Laserlinie ausgeglichen und "Fehllicht", das unreflektiert den reflektierenden Kegel passieren könnte, vermieden werden. In einer weiteren, nicht erfindungsgemässen Ausführungsform der Erfindung können zumindest zwei Laserstrahlen vorzugsweise mittels Strahlteilung durch ein teilreflektierendes optisches Element aus einer Laserstrahlquelle, vorzugsweise aus einer Laserdiode auskoppelbar sein. Dies kann im einfachsten Fall durch einen teildurchlässigen Spiegel erzielt werden, der im 45°-Winkel zu dem zu teilenden Laserstrahl angeordnet ist. Alternativ könnten beispielsweise partiell verspiegelte Elemente, Prismen oder intermittierend arbeitende beispielsweise mechanische oder elektrooptische Elemente zur Strahlteilung Anwendung finden. Hierdurch ist es möglich, eine Laserstrahlquelle einzusparen. Dies ist insbesondere vorteilhaft, wenn beispielsweise eine grüne Laserlinie durch das Mehr-Linien-Lasergerät bereitgestellt werden soll, da derzeit im grünen Spektralbereich emittierende Laserstrahlquellen noch relativ hochpreisig sind. Erfindungsgemäss kann der nutzbare Winkelbereich der vom reflektierenden Kegel abgestrahlten Laserlinie wenigstens 180°, vorzugsweise größer als 200°, insbesondere größer als 200° in der horizontalen Ebene und größer als 240° in der vertikalen Ebene sein. Hierdurch ist es möglich Laserlinien bereitzustellen, die mehr als einen Halbkreis überdecken und sich in zwei Punkten schneiden, wobei zusätzlich Anwendungsbereiche erschlossen werden können. Beispielsweise kann im Falle eines Winkelbereichs von mehr als 240° in der vertikalen Ebene in zahlreichen Anwendungsfällen auch bei einer Aufstellung des Mehr-Linien-Lasergerätes auf einem Stativ eine zumeist vollständige, von der Decke bis zum Boden reichende Lotlinie auf einer Wand bereitgestellt werden.

In einer weiteren bevorzugten Ausführungsform der Erfindung kann ein Optikträger, an und/oder in dem die Laserstrahlquellen, die kollimierenden optischen Elemente und die reflektierenden Kegel montierbar sind, in einem Gravitationsfeld ausrichtbar - vorzugsweise selbstausrichtend - sein, wodurch die Laserstrahlen und Kegelachsen in Richtung des Gravitationsvektors oder senkrecht zu diesem ausrichtbar sind. Durch eine solche Konstruktion können besonders zweckmäßig und exakt horizontale und vertikale Laserlinien bereitgestellt werden.

In einer weiteren bevorzugten Ausführungsform der Erfindung kann das selbstnivellierende Mehr-Linien-Lasergerät einen dritten reflektierenden Kegel oder eine dritte Einrichtung zur Laserstrahlaufweitung, insbesondere eine Zylinderlinse oder ein diffraktives optisches Element (DOE) zur Erzeugung einer weiteren vorzugsweise vertikalen Laserlinie, vorzugsweise senkrecht zu zwei anderen Laserlinien, aufweisen. So ist es beispielsweise denkbar, durch Erweiterung um einen dritten Laserstrahl und dritten reflektierenden Kegel eine dritte Laserlinie zu erzeugen, die eine dritte Raumebene aufspannt und auf den beiden anderen Laserlinien senkrecht steht. Des weiteren ist es besonders vorteilhaft möglich, einen Laserstrahl durch eine Zylinderlinse oder ein diffraktives optisches Element (DOE) in einer dritten Raumebene aufzuweiten und so eine dritte Laserlinie zu erzeugen, die auf den beiden anderen Laserlinien senkrecht steht, wobei sich eine solche Ausführungsform besonders raumsparend und kostengünstig realisieren lässt.

In einer weiteren bevorzugten Ausführungsform der Erfindung können die Laserstrahlquellen, die kollimierenden optischen Elemente und die reflektierenden Kegel an und/oder in einem Optikträger montierbar sein, wobei der Optikträger selbstnivellierend ausgeführt und vorzugsweise pendelnd an vorzugsweise zwei zueinander senkrechten und in einem Betriebszustand im Wesentlichen horizontal ausgerichteten Lagerachsen aufgehängt ist. Hierdurch kann auf besonders vorteilhafte Weise eine Selbstnivellierfähigkeit des Mehr-Linien-Lasergerätes erreicht werden.

In einer weiteren bevorzugten Ausführungsform der Erfindung kann der Optikträger eine Schwingungsdämpfung, vorzugsweise eine magnetische Dämpfung, insbesondere eine Wirbelstromdämpfung aufweisen. Durch eine solche Schwingungsdämpfung kann die Einschwingdauer und die erzielbare Einstellgenauigkeit der Laserlinien erheblich verbessert, dadurch Praxisnutzen und Effizienz beim praktischen Einsatz erhöht werden.

### Zeichnung

Anhand der Zeichnungen wird die Erfindung nachstehend exemplarisch anhand eines Ausführungsbeispiels eingehend erläutert. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen, weiteren Kombinationen zusammenfassen.

Es zeigen:
- Fig. 1: Seitenaufsicht auf den Optikträger einer Ausführungsform des selbstnivellierenden Mehr-Linien-Lasergerätes mit eingebauten Lasermodulen (beinhaltend u.a. Laserdiode und Kollimatorlinsen) und Projektionskegeln (reflektierenden Kegeln), sowie mit kardanischer Aufhängung und Wirbelstromdämpfung,
- Fig. 2: perspektivische Aufsicht auf den Gegenstandes der Fig. 1,
- Fig. 3: Seitenaufsicht des in ein Gehäuse eingebauten selbstnivellierenden Mehr-Linien-Lasergerätes der Ausführungsform der Fig. 1 mit dargestellten Laserlichtebenen,
- Fig. 4: Schrägansicht des in ein Gehäuse eingebauten selbstnivellierenden Mehr-Linien-Lasergerätes der Ausführungsform der Fig. 1 mit dargestellten Laserlichtebenen,
- Fig. 5: schematische Darstellung der Strahllage des elliptischen Laserstrahls auf dem Projektionskegel (reflektierender Kegel),
- Fig. 6: perspektivische Aufsicht auf den Optikträger einer zweiten, nicht erfindungsgemässen Ausführungsform des selbstnivellierenden Mehr-Linien-Lasergerätes mit eingebauten Lasermodulen (beinhaltend u.a. Laserdiode und Kollimatorlinsen) und Projektionskegeln (reflektierenden Kegeln), sowie mit kardanischer Aufhängung und Wirbelstromdämpfung,
- Fig. 7: perspektivische Aufsicht auf den Optikträger einer dritten, nicht erfinderischen Ausführungsform des selbstnivellierenden Mehr-Linien-Lasergerätes mit eingebauten Lasermodulen (beinhaltend u.a. Laserdiode und Kollimatorlinsen) und Projektionskegeln (reflektierenden Kegeln), sowie mit kardanischer Aufhängung und Wirbelstromdämpfung

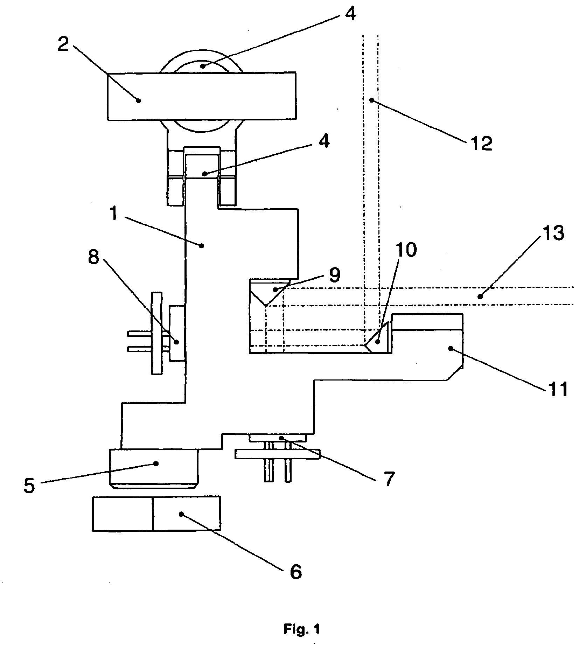

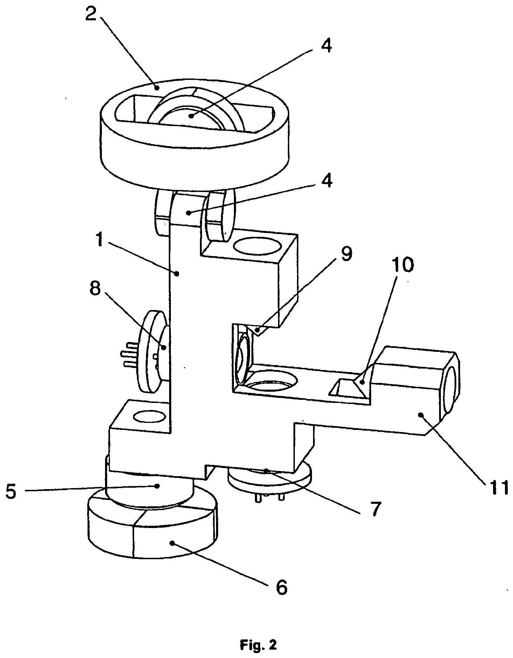

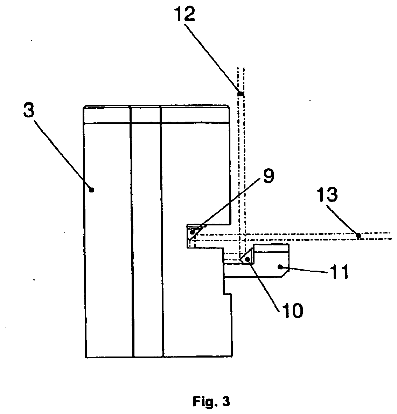

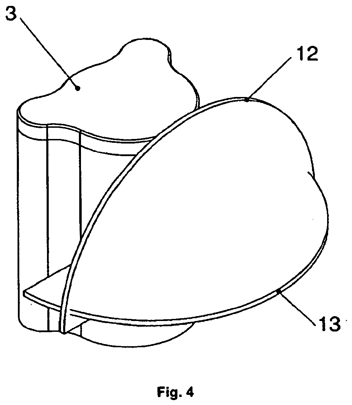

Die Darstellungen der Fig. 1 und 2 zeigen den grundlegenden Aufbau der zentralen optischen und mechanischen Komponenten einer Ausführungsform des selbstnivellierenden Mehr-Linien-Lasergerätes. Es weist einen Optikträger 1 auf, der vorzugsweise im Wesentlichen aus einer metallischen Druckgusslegierung (vorzugsweise Aluminium- oder Zinkdruckgusslegierung) besteht und die wesentlichen optischen Elemente, die nachstehend erläutert werden, trägt. Dieser Optikträger 1 ist pendelnd in einem Rahmenelement 2, das mit einem Gerätegehäuse (nur in Fig. 3 und 4 mit Bzz. 3 dargestellt) verbunden ist, aufgehängt.

Die pendelnde Aufhängung des Optikträgers 1 erfolgt über ein Kreuzgelenk mit Kugellagern 4, wobei die beiden zueinander senkrechten Lagerachsen nicht in einer Ebene, sondern vertikal versetzt angeordnet sind, wodurch pro Drehachse nur ein Kugellager erforderlich ist und Alignierungsprobleme und Verspannungen in den Lagerachsen, wie sie aufgrund von-Fertigungstoleranzen bei der Verwendung zweier Kugellager auftreten könnten, vermieden werden. Durch diesen Aufbau kann sich der Optikträger 1 um zwei Achsen frei auspendeln und im Gravitationsfeld der Erde ausrichten.

Um die Einschwingdauer des pendelnd und - im Rahmen des technisch Möglichen - möglichst reibungsfrei aufgehängten Optikträgers 1 erheblich zu verkürzen, ohne die Einstellgenauigkeit der Endposition des Optikträgers 1 im Gravitationsfeld zu verringern, besitzt der Optikträger 1 des hier dargestellten Ausführungsbeispiels eine Wirbelstromdämpfung nach dem Prinzip des Waltenhof'schen Pendels. Hierzu ist ein Kupferblock 5 am unteren, freien Ende des pendelnd aufgehängten Optikträgers 1 angebracht, wobei sich der Kupferblock 5 im Falle einer Pendelbewegung in geringem Abstand berührungsfrei über einen Permanentmagneten 6, der mit dem Gehäuse 3 fest verbunden ist, bewegt. Dieser Permanentmagnet 6 umfasst vorteilhafterweise eine Mehrzahl einzelner Magnetelemente (in diesem Fall: vier) mit vorzugsweise alternierender Magnetfeldorientierung und ist dahingehend optimiert, dass die Magnetfeldlinien mit einer möglichst hohen Magnetfelddichte und möglichst großen Magnetfeldstärkegradienten durch den Kupferblock 5 hindurchtreten und dort via elektromagnetischer Induktion ein dem Feld des Permanentmagneten 6 entgegen gerichtetes Magnetfeld erzeugen; dieses induzierte Magnetfeld dämpft die Pendelbewegung des Optikträgers 1 stark, ohne jedoch die Endposition des Optikträgers 1 zu beeinflussen, da die Dämpfung nach dem magnetischen Wirbelstromprinzip proportional zur Relativbewegungsgeschwindigkeit zwischen Permanentmagnet 6 und Kupferblock 5 ist und somit im statischen Falle nach Dämpfung der Bewegung des Optikträgers 1 entfällt.

Die Dämpfung kann auf diese Weise optimiert und beispielsweise nahezu auf den "aperiodischen Grenzfall" eingestellt werden. Mittels der Wirbelstromdämpfung stellt sich der Optikträger 1 nach dem Aufstellen des Mehr-Linien-Lasergerätes oder nach einem Stoß gegen das Mehr-Linien-Lasergerät innerhalb kurzer Zeit von typischerweise von 0,5 bis 5 Sekunden mit einer hohen Genauigkeit von z.B. wenigen Zehntel Millimetern pro Meter im Gravitationsfeld der Erde ein. Um die genaue Ausrichtung des Optikträgers 1 im Erdmagnetfeld zu justieren, kann der Optikträger in der Nähe des Kupferblocks zwei Tarierschrauben aufweisen (z.B. Madenschrauben; nicht dargestellt), die zueinander und zur Schwerpunktlinie des Optikträgers 1 vorzugsweise 90°-Winkel - sowie vorzugsweise zur Ausrichtung des horizontalen Laserstrahls 0°- bzw. 90°-Winkel - einschließen und über deren Einschraubtiefe die Schwerpunktlage des Optikträgers 1 und hierdurch die exakte Ausrichtung der Laserlinien geringfügig korrigiert werden kann.

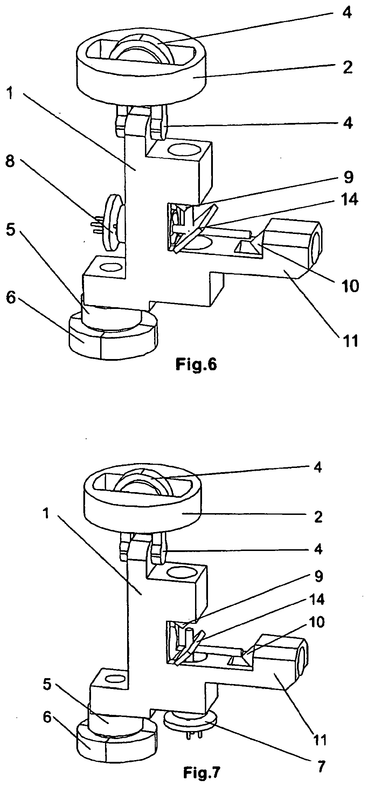

Ferner besitzt der Permanentmagnet 6, der einen größeren Durchmesser aufweist als der Kupferblock 5, an dessen Außenumfang einen Radialanschlag (nicht dargestellt) für besagten Kupferblock 5, wodurch die Pendelbewegung des Optikträgers 1 (und damit der Selbstnivellierbereich des selbstnivellierenden Mehr-Linien-Lasergerätes) beispielsweise auf einen bestimmten Wert (beispielsweise im Bereich von 5° bis 15°, typischerweise auf maximal 5° oder 8°) begrenzt werden kann. Hierdurch kann ein Anschlagen des Optikträgers 1 oder der damit verbundenen Bauteile am Gehäuse 3 und ein Überdehnen beispielsweise der (hochflexiblen und biegeschlaffen, jedoch äußerst dünnen und zugempfindlichen) elektrischen Versorgungskabel (nicht dargestellt) für die Laserstrahlquellen 7,8 beispielsweise bei sehr schräger Aufstellung des Mehr-Linien-Lasergerätes, im Betrieb oder beim Transport verhindert werden. Bei Berührung zwischen dem Kupferblock 5 und dem Radialanschlag des Permanentmagneten 6 kann ein elektrischer Kontakt in einem Kontrollstromkreis geschlossen und der Benutzer so vor einem nicht korrekt nivellierten System z.B. durch ein optisches oder akustisches Signal und/oder durch periodisches Dunkeltasten (Blinken) der Laserstrahlquellen 7,8 gewarnt werden.
Der optische Aufbau des selbstnivellierenden Mehr-Linien-Lasergerätes weist in einem ersten, in Fig. 1 dargestellten Ausführungsbeispiel grundsätzlich eine vertikale Laserstrahlquelle 7 auf, die vorzugsweise nahe der Schwerpunktlinie und parallel zu dieser am Optikträger 1 angebracht ist und einen Laserstrahl von unten gegen die Spitze eines darüber am Optikträger 1 angebrachten Spiegelkegels (oder reflektierenden Kegels) 9 richtet, wodurch der Laserstrahl 13 in einer horizontalen Teilebene abgelenkt und aufgeweitet wird, sowie eine horizontale Laserstrahlquelle 8, die senkrecht zur Schwerpunktlinie des Optikträgers 1 angebracht ist und einen Laserstrahl gegen die Spitze eines auf einem horizontalen Ausleger 11 befestigten Spiegelkegels (oder reflektierenden Kegels) 10 richtet, wodurch der Laserstrahl 12 in einer vertikalen Teilebene abgelenkt und aufgeweitet wird, wobei die Teilebenen der beiden aufgeweiteten Laserstrahlen zueinander exakt einen 90°-Winkel einschließen (siehe insbesondere Fig. 1). Dabei stehen auch die Achsen der reflektierenden Kegel aufeinander senkrecht; zudem schneiden sich vorteilhafterweise - wie in diesem Ausführungsbeispiel - die Achsen der reflektierenden Kegel in einem Punkt. In einem zweiten, in Fig. 6 dargestellten nicht erfindungsgemässen Ausführungsbeispiel besitzt das selbstnivellierende Mehr-Linien-Lasergerät - anstelle zweier Laserstrahlquellen 7,8 - nur eine einzige Laserstrahlquelle 8 (hier die horizontale Laserstrahlquelle 8), die einen horizontalen Laserstrahl emittiert. Dieser Laserstrahl trifft auf einen teildurchlässigen Spiegel 14, der im Kreuzungspunkt der Achsen der beiden reflektierenden Kegel 9,10 angeordnet ist und zu diesen Achsen jeweils 45°-Winkel einschließt, wobei die Winkelhalbierende zwischen den Achsen der beiden reflektierenden Kegel 9,10 sowie eine im Schnittpunkt der Achsen der beiden reflektierenden Kegel 9,10 auf diesen Achsen senkrecht stehende Linie die Ebene der reflektierenden Oberfläche des teildurchlässigen Spiegels 14 definieren. Es ist jedoch ebenso denkbar, den teildurchlässigen Spiegel 14 gegenüber der vorbeschriebenen Lage parallel zu verschieben, um hierdurch die Ausleuchtungsgeometrie der reflektierenden Kegel 9,10 unterschiedlich zu gestalten und so Orientierung und Winkelbereich der aufgeweiteten Laserlinie zu beeinflussen. Durch diese Anordnung des teildurchlässigen Spiegels 14 wird der Laserstrahl der horizontalen Laserstrahlquelle in zwei, zueinander senkrechte Laser-Teilstrahlen - einen horizontalen, nicht-abgelenkten Laser-Teilstrahl und einen vertikalen, am teildurchlässigen Spiegel 14 reflektierten Laser-Teilstrahl - aufgespalten, die parallel zur Achse jeweils eines der beiden reflektierenden Kegel gegen die Spitze dieses reflektierenden Kegels 9,10 gerichtet sind, wodurch wiederum zwei projizierbare Laserlinien 12,13 erzeugt werden können.

In gleicher Weise ist es möglich, ein selbstnivellierendes Mehr-Linien-Lasergerät in einer anderen, in Fig. 7 dargestellten, nicht erfindungsgemässen Ausführungsform nur mit einer vertikalen Laserstrahlquelle 7 zu betreiben und den hierdurch erzeugten vertikalen Laserstrahl mittels eines teildurchlässigen Spiegels 14 in zwei Laser-Teilstrahlen - einen vertikalen, nicht-abgelenkten Laser-Teilstrahl und einen horizontalen, am teildurchlässigen Spiegel 14 reflektierten Laser-Teilstrahl - aufzuspalten, die parallel zur Achse jeweils eines der beiden reflektierenden Kegel gegen die Spitze dieses reflektierenden Kegels 9,10 gerichtet sind, wodurch sich ebenso zwei projizierbare Laserlinien 12,13 erzeugen lassen.

Als Laserstrahlquellen 7,8 kommen preisgünstige "low-power" Laserdioden zum Einsatz, die inhärent, d.h. aufgrund des physikalischen Entstehungsprinzips elliptisch divergente Lichtkegel erzeugen. Diese Lichtkegelwerden durch Kollimatorlinsen (nicht dargestellt) parallelgerichtet. Da der Justierung zwischen Laserdiode und Kollimatorlinse eine wesentliche Bedeutung zukommt, ist es unter produktionstechnischen und Kostengesichtspunkten vorteilhaft, Laserdiode und Kollimatorlinse zu einem Lasermodul 7,8 als Baugruppe zusammenzufassen, die bereits ein parallelgerichtetes, elliptisches Strahlenbündel emittieren, und so - als vorgefertigtes Lasermodul 7,8 - in den Optikträger 1 einzubauen.

Diese elliptischen Parallelstrahlen eines Lasermoduls 7,8 werden exzentrisch, d.h. außermittig in Axialrichtung gegen die Spitze eines der Spiegelkegel 9,10, der die Form eines geraden Kreiskegels mit 90° Öffnungswinkel aufweist, gerichtet (d.h. die Mittelachse des Laserstrahls weist gegenüberder Kegelachse einen Parallelversatzauf), wobei hauptsächlich eine (der bei einem die Kegelachse enthaltenden, also symmetrischen Kegelschnitt entstehenden) Kegelhälfte beleuchtet wird. Durch die verspiegelte, im 45°-Winkel gegen den Laserstrahl geneigte Mantelfläche des reflektierenden Kegels wird der Laserstrahl auf der beleuchteten Kegelhälfte im 90°-Winkel durch Reflexion umgelenkt und erzeugt so - anstelle einer Vollkreisebene, wie sie bei zentraler Beleuchtung des Kegels aufgrund der Rotationssymmetrie des Kegels entstehen würde - in etwa eine 180°-Laserlinie oder Halbebene. Die Spiegelkegel sind dabei jeweils so montiert, dass zumindest der beleuchtete Kegelabschnitt freisteht und die Abstrahlung des Laserlichts in der Abstrahlungsebene nicht behindert wird.

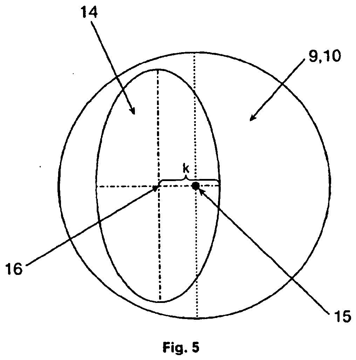

Vorzugsweise wird jedoch nicht - wie zuvor beschrieben - ausschließlich eine Kegelhälfte mit dem Laserstrahl beleuchtet. Das kollimierte Laserlicht der Laserdiode erzeugt, wie bereits erwähnt, einen Laserstrahl mit elliptischem Strahlquerschnitt 14. Wie aus Fig. 5 zu ersehen, wird dieser Laserstrahl nun vorzugsweise so gegen die Spitze 15 des Spiegelkegels 9,10 gerichtet, dass die Mittelachse 16 des elliptischen Laserstrahls zwar parallel zu der Kegelachse ausgerichtet ist, jedoch nicht mit dieser zusammenfällt (den Kegel 9,10 also exzentrisch beleuchtet), wobei die Kegelachse 15 also die kurze Halbachse k des elliptischen Strahlquerschnitts 14 schneidet. Dabei weist die Mittelachse des elliptischen Strahlquerschnitts 14 gegenüber der Kegelachse 15 einen Parallelversatz auf und ist in Richtung der kurzen Halbachsen k des elliptischen Strahlquerschnitts 14 von der Kegelachse 15 beabstandet, wobei dieser Abstand der Mittelachse 16 des elliptischen Strahlquerschnitts 14 von der Kegelachse 15 in diesem Ausführungsbeispiel zumindest etwas kleiner ist als die Länge der kurzen Halbachsen k des elliptischen Strahlquerschnitts 14. Hierdurch wird gewährleistet, dass eine Kegelhälfte mit dem Hauptteil der Laserenergie beleuchtet wird und so eine besonders helle und gleichmäßige projizierbare Laserlinie 12,13 erzeugt, während die andere Kegelhälfte nur in geringerem Umfang beleuchtet wird. Da ein kleinerer Anteil des Laserstrahls jedoch auf diese andere Kegelhälfte herüberreicht, lässt sich eine projizierbare Laserlinie 12,13 erzeugen, die sich über einen Winkelbereich von mehr als 180° erstreckt und in der 180°-Position noch eine brauchbare Helligkeit aufweist Der Versatz kann in der Weise optimiert werden, dass die projizierbare Laserlinie 12,13 über einen Winkelbereich von mehr als 180° eine hohe und weitgehend gleichmäßige Helligkeitsverteilung aufweist, wobei die Elliptizität der von den Laserdioden abgestrahlten Laserstrahlen in vorteilhafter Weise genutzt werden kann. Durch den großen durch die Laserlinie 12,13 abgedeckten Winkelbereich von mehr als 180° ist es möglich, die beiden Laserstrahlen so stark in einer Ebene aufzuweiten, dass diese zwei Schnittpunkte (oder Markierungskreuze) der Laserlinien in "180°-Stellung" zueinander beispielsweise auf einander gegenüberliegenden Wänden erzeugen (siehe Fig. 4).

Grundsätzlich besteht ein Zusammenhang zwischen der Leistung der Laserdiode einer bestimmten Bauart und der Elliptizität des emittierten Laserstrahls 14; so weisen insbesondere Laserstrahlen von Laserdioden mit geringer Leistung besonders stark abgeflacht elliptische Strahlquerschnitte auf. Es kann daher vorteilhaft sein, insbesondere bei solchen Laserdioden den Strahl geringfügig in den Randbereichen zu maskieren, so dass beispielsweise die äußersten Randbereiche in Richtung der langen Halbachse beschnitten werden und so ein Strahlquerschnitt entsteht, der weniger stark elliptisch ist. Hierdurch kann beispielsweise die Helligkeitsverteilung der projizierbaren Laserlinie 12,13 beispielsweise über einen Winkelbereich von 180° noch besser ausgeglichen werden und zusätzlich verhindert werden, dass Randbereiche des elliptischen Laserstrahls 14 unreflektiert am reflektierenden Kegel vorbei gehen und störende Reflexe und Lichtfiguren erzeugen oder eine gefährliche Blendung von Personen hervorrufen. Eine solche Maskierung könnte beispielsweise durch eine elliptische, kreissektorförmige oder andersartig geformte Blende vorgenommen werden, die im Strahlengang der Laserdiode vor oder hinter der Kollimatorlinse angeordnet ist. Die Form einer solchen Blende kann auch in der Weise angepasst und dahingehend optimiert werden, dass die Helligkeitsverteilung der Laserlinie 12,13 über den gewünschten Winkelbereich (beispielsweise 180°) nahezu vollständig ausgeglichen ist, wobei eine solche Blende nur kleinere Randbereiche des Laserstrahls maskieren müsste und somit die nutzbare Leistung der Laserdiode nur wenig reduzieren würde.

Das Gerätegehäuse 3 (siehe Fig. 4) besteht vorzugsweise im Wesentlichen aus einem polymeren Werkstoff oder einem beispielsweise faserarmierten Polymer-Verbundwerkstoff (z.B. faserverstärkter Duroplast oder Thermoplast). Das Gerätegehäuse 3 umgibt die zuvor beschriebene mechanische und optische Anordnung und schützt diese vor mechanischer Beschädigung und vermindert die Gefahr von Verunreinigungen (siehe Fig. 3). Das Gerätegehäuse 3 weist eine Öffnung auf, durch die der horizontale Laserstrahl 13 austreten kann und der horizontale Ausleger 11 des Optikträgers 1 nach außen ragt, so dass dieser die Beweglichkeit des Optikträgers 1 nicht beeinträchtigt und der am horizontalen Ausleger befestigte Kegel 10 außerhalb des Gehäuses platziert werden kann. Alternativ kann auch über dem offenen Gehäuseabschnitt eine optisch neutrale, den Strahlengang der aufgefächerten Laserstrahlen nicht verzerrende Schutzkuppel beispielsweise aus transparentem, schlagzähem Kunststoff vorgesehen sein.

Weiterhin nimmt das Gehäuse 3 in dem hier dargestellten Ausführungsbeispiel noch zwei Batterien oder Akkus zur Stromversorgung (nicht dargestellt), Betätigungselemente (nicht dargestellt), vorzugsweise Folientaster zum gemeinsamen und getrennten Schalten der beiden Laserstrahlquellen, sowie eine elektronische Schaltung (nicht dargestellt) zum Betrieb der Laserstrahlquellen auf. Die Stromversorgung der Laserstrahlquellen von der im Gehäuse 3 montierten elektronischen Schaltung zu den im Optikträger 1 pendelnd aufgehängten Laserdioden 7 erfolgt über sehr dünne, hochflexible und biegeschlaffe elektrische Versorgungskabel (nicht dargestellt), die nahe am Aufhängungspunkt des Optikträgers 1 vorbei geführt sind, um das Auspendeln des Optikträgers 1 im Gravitationsfeld und die Nivelliergenauigkeit möglichst wenig zu beeinträchtigen.

Die Erfindung wird nicht durch konkrete Ausführungsformen begrenzt und Merkmale unterschiedlicher Ausführungsformen sind frei miteinander kombinierbar. Begriffe in der Anmeldung, die die Lage unterschiedlicher Komponenten zueinander beschreiben, wie "exakt 90°" oder "senkrecht zueinander", "auf einer Linie", "innerhalb der optischen Ebene" oder ähnliche beschreiben die gewünschte Idealposition/-lage und beinhalten, dass sich aufgrund der mechanischen/optischen Ausgestaltung gewisse Abweichungen und Ungenauigkeiten ergeben können, die von der erfinderischen Lehre mit umfasst sind. Im Falle von Bereichsangaben sind nicht nur die angegebenen Endwerte, sondern auch alle dazwischen liegenden Werte und darin enthaltenen Teilbereiche von der erfinderischen Lehre mit umfasst. Wird in dieser Anmeldung von einer Laserlinie oder projizierbaren Laserlinie gesprochen, so ist hierbei die geometrische Figur gemeint, die entsteht, wenn der durch die Reflexion am Kegel in einer Ebene aufgeweitete Laserstrahl auf einen ebenen Gegenstand fällt und dort in der Projektion eine Laserlichtlinie erzeugt.

## Patentansprüche

1. Selbstnivellierendes Mehr-Linien-Lasergerät mit zumindest zwei Laserstrahlen und zumindest zwei reflektierenden Kegeln (9,10), wobei die Kegelachsen der reflektierenden Kegel (9,10) aufeinander senkrecht stehen und jeder der Laserstrahlen exzentrisch und parallel zur Achse eines der reflektierenden Kegel gegen die Spitze dieses reflektierenden Kegels (9,10) richtbar ist, wodurch zumindest zwei projizierbare Laserlinien (12,13) erzeugbar sind, wobei durch Laserdioden die Laserstrahlen mit elliptischen Strahlquerschnitten (14) erzeugbar sind, wobei die Mittelachsen (16) der elliptischen Strahlquerschnitte (14) gegenüber der jeweiligen Kegelachse (15) einen Parallelversatz aufweisen und in Richtung der kurzen Halbachse des jeweiligen elliptischen Strahlquerschnitts (14) von der jeweiligen Kegelachse (15) beabstandet sind, **dadurch gekennzeichnet, dass** der jeweilige Abstand der Mittelachsen (16) der elliptischen Strahlquerschnitte (14) von der jeweiligen Kegelachse (15) kleiner ist als die Länge der kurzen Halbachse des jeweiligen elliptischen Strahlquerschnitts (14), sodass sich die zwei projizierbaren Laserlinien (12,13) über einen Winkelbereich von mehr als 180° erstrecken und diese zwei Schnittpunkte der Laserlinien (12,13) in 180°-Stellung zueinander, insbesondere auf einander gegenüberliegenden Wänden, erzeugen.

2. Selbstnivellierendes Mehr-Linien-Lasergerät nach Anspruch 1, **dadurch gekennzeichnet, dass** die reflektierenden Kegel (9,10) zumindest Teilflächen eines Mantels eines geraden Kreiskegels mit einem Kegelöffnungswinkel von 90° aufweisen.

3. Selbstnivellierendes Mehr-Linien-Lasergerät nach Anspruch 1, **dadurch gekennzeichnet, dass** zumindest einer der reflektierenden Kegel (9,10) nicht-reflektierende Teilflächen aufweist.

4. Selbstnivellierendes Mehr-Linien-Lasergerät nach mindestens einem der Ansprüche 1 oder 2, **dadurch gekennzeichnet, dass** zumindest ein Laserstrahl durch eine Laserdiode als Laserstrahlquelle erzeugbar ist und vorzugsweise durch zumindest ein kollimierendes optisches Element, insbesondere eine Kollimatorlinse, kollimierbar ist.

5. Selbstnivellierendes Mehr-Linien-Lasergerät nach mindestens einem der Ansprüche 3 oder 4, **dadurch gekennzeichnet, dass** eine Blende im Strahlengang der Laserdiode angeordnet ist.

6. Selbstnivellierendes Mehr-Linien-Lasergerät nach mindestens einem der vorhergehenden Ansprüche, **dadurch gekennzeichnet, dass** der nutzbare Winkelbereich der vom reflektierenden Kegel (9,10) abgestrahlten Laserlinie (12,13) wenigstens 180°, vorzugsweise größer als 200°, insbesondere größer als 200° in der horizontalen Ebene und größer als 240° in der vertikalen Ebene, ist.

7. Selbstnivellierendes Mehr-Linien-Lasergerät nach mindestens einem der vorhergehenden Ansprüche, **dadurch gekennzeichnet, dass** ein Optikträger (1), an und/oder in dem die Laserstrahlquellen, die kollimierenden optischen Elemente und die reflektierenden Kegel (9,10) montierbar sind, in einem Gravitationsfeld ausrichtbar - vorzugsweise selbstausrichtend - ist, wodurch die Laserstrahlen und Kegelachsen in Richtung des Gravitationsvektors oder senkrecht zu diesem ausrichtbar sind.

8. Selbstnivellierendes Mehr-Linien-Lasergerät nach mindestens einem der vorhergehenden Ansprüche, **dadurch gekennzeichnet, dass** das selbstnivellierende Mehr-Linien-Lasergerät einen dritten reflektierenden Kegel oder eine dritte Einrichtung zur Laserstrahlaufweitung, insbesondere eine Zylinderlinse oder ein diffraktives optisches Element (DOE) zur Erzeugung einer weiteren vorzugsweise vertikalen Laserlinie, vorzugsweise senkrecht zu zwei anderen Laserlinien, aufweist.

9. Selbstnivellierendes Mehr-Linien-Lasergerät nach mindestens einem der vorhergehenden Ansprüche, **dadurch gekennzeichnet, dass** die Laserstrahlquellen, die kollimierenden optischen Elemente und die reflektierenden Kegel (9,10) an und/oder in einem Optikträger (1) montierbar sind, wobei der Optikträger (1) selbstnivellierend ausgeführt und vorzugsweise pendelnd an vorzugsweise zwei zueinander senkrechten und in einem Betriebszustand im Wesentlichen horizontal ausgerichteten Lagerachsen aufgehängt ist.

10. Selbstnivellierendes Mehr-Linien-Lasergerät nach mindestens einem der vorhergehenden Ansprüche, **dadurch gekennzeichnet, dass** der Optikträger (1) eine Schwingungsdämpfung, vorzugsweise eine magnetische Dämpfung, insbesondere eine Wirbelstromdämpfung (5,6) aufweist.

## Claims

1. Self-levelling multi-line laser device having at least two laser beams and at least two reflecting cones (9, 10), in which the cone axes of the reflecting cones (9, 10) are perpendicular to one another, and each of the laser beams can be directed eccentrically and parallel to the axis of one of the reflecting cones against the tip of said reflecting cone (9, 10), as a result of which at least two projectable laser lines (12, 13) can be generated, wherein the laser beams of elliptical beam cross sections (14) can be generated by laser diodes, the middle axes (16) of the elliptical beam cross sections (14) having a parallel offset from the respective cone axis (15) and being spaced apart from the respective cone axis (15) in the direction of the short half-axis of the respective elliptical beam cross section (14), **characterized in that** the respective spacing of the middle axes (16) of the elliptical beam cross sections (14) from the respective cone axis (15) is smaller than the length of the short half-axis of the respective elliptical beam cross section (14), such that the two projectable laser lines (12, 13) extend over an angle range of more than 180° and these generate two points of intersection of the laser lines (12, 13) in a 180° position relative to one another, in particular on mutually opposite walls.

2. Self-levelling multi-line laser device according to Claim 1, **characterized in that** the reflecting cones (9, 10) have at least partial areas of a lateral surface of a right circular cone with a cone aperture angle of 90°.

3. Self-levelling multi-line laser device according to Claim 1, **characterized in that** at least one of the reflecting cones (9, 10) has non-reflecting partial areas.

4. Self-levelling multi-line laser device according to at least one of Claims 1 and 2, **characterized in that** at least one laser beam can be generated by a laser diode as laser beam source, and can preferably be collimated by at least one collimating optical element, in particular a collimator lens.

5. Self-levelling multi-line laser device according to at least one of Claims 3 and 4, **characterized in that** a diaphragm is arranged in the beam path of the laser diode.

6. Self-levelling multi-line laser device according to at least one of the preceding claims, **characterized in that** the useful angular range of the laser line (12, 13) emitted by the reflecting cone (9, 10) is at least 180°, preferably greater than 200°, in particular greater than 200° in the horizontal plane and greater than 240° in the vertical plane.

7. Self-levelling multi-line laser device according to at least one of the preceding claims, **characterized in that** an optical system carrier (1), on and/or in which the laser beam sources, the collimating optical elements and the reflecting cones (9, 10) can be mounted, is alignable in a gravitational field - preferably in self-aligning fashion - as a result of which the laser beams and cone axes are alignable in the direction of the gravitational vector, or perpendicular thereto.

8. Self-levelling multi-line laser device according to at least one of the preceding claims, **characterized in that** the self-levelling multi-line laser device has a third reflecting cone or a third device for laser beam expansion, in particular a cylindrical lens or a diffractive optical element (DOE) for generating a further, preferably vertical laser line, preferably perpendicular to two other laser lines.

9. Self-levelling multi-line laser device according to at least one of the preceding claims, **characterized in that** the laser beam sources, the collimating optical elements and the reflecting cones (9, 10) are mountable on and/or in an optical system carrier (1), the optical system carrier (1) being of self-levelling design and suspended, preferably oscillating like a pendulum, on preferably two mutually perpendicular bearing axes aligned substantially horizontally in an operating state.

10. Self-levelling multi-line laser device according to at least one of the preceding claims, **characterized in that** the optical system carrier (1) has a vibration damping means, preferably a magnetic damping means, in particular an eddy-current damping means (5, 6).

## Revendications

1. Appareil laser multi-lignes à auto-ajustement du niveau, présentant au moins deux faisceaux laser et au moins deux cônes réfléchissants (9, 10), les axes des cônes réfléchissants (9, 10) étant perpendiculaires l'un à l'autre et chacun des faisceaux laser pouvant être orienté de manière décentrée et parallèlement à l'axe de l'un des cônes réfléchissants en direction du sommet de ce cône réfléchissant (9, 10), ce qui permet de former au moins deux lignes laser (12, 13) projetables, les faisceaux laser dotés de sections transversales elliptiques de faisceau (14) pouvant être générés par des diodes laser, les axes médians (16) des sections transversales elliptiques de faisceau (14) présentant un décalage parallèle par rapport à l'axe de cône respectif (15) et étant espacés de l'axe de cône respectif (15) dans la direction du petit demi-axe de la section transversale elliptique de faisceau respectif (14), **caractérisé en ce que** la distance respective des axes médians (16) des sections transversales elliptiques de faisceau (14) à l'axe de cône respectif (15) est inférieure à la longueur du petit demi-axe de la section transversale elliptique de faisceau respective (14), de telle sorte que les deux lignes laser (12, 13) projetables s'étendent sur une plage angulaire supérieure à 180° et que celles-ci générèrent deux points d'intersection des lignes laser (12, 13) dans une position à 180° l'une par rapport à l'autre, en particulier sur des parois opposées l'une à l'autre.

2. Appareil laser multi-lignes à auto-ajustement du niveau selon la revendication 1, **caractérisé en ce que** les cônes réfléchissants (9, 10) présentent au moins des parties de la surface d'une enveloppe d'un cône circulaire rectiligne dont l'angle d'ouverture de cône est de 90°.

3. Appareil laser multi-lignes à auto-ajustement du niveau selon la revendication 1, **caractérisé en ce qu'**au moins l'un des cônes réfléchissants (9, 10) présente des parties de surface non réfléchissantes.

4. Appareil laser multi-lignes à auto-ajustement du niveau selon au moins l'une des revendications 1 et 2, **caractérisé en ce qu'**au moins un faisceau laser peut être généré par une diode laser en tant que source de faisceau laser et peut être collimaté de préférence par au moins un élément optique collimateur, en particulier une lentille collimatrice.

5. Appareil laser multi-lignes à auto-ajustement du niveau selon au moins l'une des revendications 3 et 4, **caractérisé en ce qu'**un obturateur est disposé dans le parcours du faisceau de la diode laser.

6. Appareil laser multi-lignes à auto-ajustement du niveau selon au moins l'une des revendications précédentes, **caractérisé en ce que** la plage angulaire utile de la ligne laser (12, 13) émise par le cône réfléchissant (9, 10) est d'au moins 180°, est de préférence supérieure à 200° et est en particulier supérieure à 200° dans le plan horizontal et supérieure à 240° dans le plan vertical.

7. Appareil laser multi-lignes à auto-ajustement du niveau selon au moins l'une des revendications précédentes, **caractérisé en ce qu'**un porte-optique (1) sur et/ou dans lequel les sources de faisceaux laser, les éléments optiques collimateurs et les cônes réfléchissants (9, 10) peuvent être montés, peut être orienté dans un champ de gravité, de préférence de manière autonome, ce qui permet aux faisceaux laser et aux axes des cônes d'être orientés dans la direction du vecteur de gravitation ou perpendiculairement à ce dernier.

8. Appareil laser multi-lignes à auto-ajustement du niveau selon au moins l'une des revendications précédentes, **caractérisé en ce que** l'appareil laser multi-lignes à auto-ajustement du niveau présente un troisième cône réfléchissant ou un troisième dispositif d'agrandissement du faisceau laser, en particulier une lentille cylindrique ou un élément optique diffractif (DOE), pour former une autre ligne laser de préférence verticale et de préférence perpendiculaire aux deux autres lignes laser.

9. Appareil laser multi-lignes à auto-ajustement du niveau selon au moins l'une des revendications précédentes, **caractérisé en ce que** les sources de faisceaux laser, les éléments optiques collimateurs et les cônes réfléchissants (9, 10) peuvent être montés sur et/ou dans un porte-optique (1), le porte-optique (1) étant à auto-ajustement du niveau et étant suspendu de préférence de manière pendulaire sur au moins deux axes de montage perpendiculaires l'un à l'autre et orientés essentiellement à l'horizontale en situation de fonctionnement.

10. Appareil laser multi-lignes à auto-ajustement du niveau selon au moins l'une des revendications précédentes, **caractérisé en ce que** le porte-optique (1) présente un amortissement des vibrations, de préférence un amortissement magnétique et en particulier un amortissement (5, 6) par courants de Foucault.
